Europäisches Patentamt

(19) **European Patent Office**

**Office européen des brevets**

(11) Veröffentlichungsnummer: **0 033 484**

**B1**

(12) **EUROPÄISCHE PATENTSCHRIFT**

(45) Veröffentlichungstag der Patentschrift:
08.04.87

(51) Int. Cl.⁴: **G 01 N 29/04**

(21) Anmeldenummer: **81100458.9**

(22) Anmeldetag: **22.01.81**

(54) **Verfahren zur Feststellung von Materialfehlern in Hohlkörpern.**

(30) Priorität: **31.01.80 DE 3003349**

(43) Veröffentlichungstag der Anmeldung:
**12.08.81 Patentblatt 81/32**

(45) Bekanntmachung des Hinweises auf die Patenterteilung:
**08.04.87 Patentblatt 87/15**

(84) Benannte Vertragsstaaten:
**BE DE FR GB IT NL**

(56) Entgegenhaltungen:
**DE-A-1 573 616**
**DE-A-2 732 631**
**US-A-3 584 504**

**J. KRAUTKRÄMER et al. "Werkstoffprüfung mit Ultraschall" 3. Auflage 1975, SPRINGER VERLAG, Berlin, Heidelberg, New York Seiten 442 bis 461**
**THE SOVIET JOURNAL OF NONDESTRUCTIVE TESTING, Band 10, Nr. 3, Mai-Juni 1974 New York V.A. P'YANKOV et al. "Setup for Ultrasonic Inspection of Welded Joints in Annular Blanks" Seiten 356 bis 358**
**Patents Abstracts of Japan Band 3, Nr. 131, 31. Oktober 1979 Seite 149E148**

**Die Akte enthält technische Angaben, die nach dem Eingang der Anmeldung eingereicht wurden und die nicht in dieser Patentschrift enthalten sind.**

(73) Patentinhaber: **Ruhrchemie Aktiengesellschaft, Bruchstrasse 219, D-4200 Oberhausen 13 (DE)**

(72) Erfinder: **Schmitz, Hans-Peter, Dipl.-Ing., Lützowstrasse 38, D-4200 Oberhausen 13 (DE)**
Erfinder: **Schleper, Bernard, Dipl.-Ing., Vennstrasse 10, D-4200 Oberhausen 13 (DE)**

(74) Vertreter: **Reichelt, Karl-Heinz, Dr., m. Br. Ruhrchemie Aktiengesellschaft Abt. PLD Postfach 13 01 60, D-4200 Oberhausen 11 (DE)**

**Beschreibung**

Die vorliegende Erfindung besteht in einem Verfahren und einer Vorrichtung zur Feststellung von Materialfehlern in den Wendungen von Hohlkörpern mittels Ultraschall. Hierbei wird der Ultraschallsender und -empfänger auch in das Innere des Hohlkörpers geführt.

Es ist bekannt, Materialschäden bei dickwandigen Rohren mit Hilfe von Ultraschall zu ermitteln. Die Prüfung erfolgt entweder von der äußeren Oberfläche her oder von innen unter Verwendung eines im Rohr bewegten Ultraschall-Prüfkopfes, der Sender und Empfänger enthält.

Die Untersuchung von Hohlkörpern von der Außenseite her hat den Vorteil, daß auch im Innern der Wandung enthaltene Fehler eindeutig lokalisiert werden können. Ein Nachteil dieses Verfahrens ist es jedoch, daß die Oberfläche des Hohlkörpers unmittelbar zugänglich sein muß und nicht z. B. durch Isolierungen oder andere Ummantelungen umschlossen ist. Außenmessungen sind daher nur begrenzt anwendbar.

Um die aufgezeigten Nachteile zu umgehen, führt man daher Untersuchungen von Hohlkörpern auch von innen durch. So dient eine in The Sov. J. Of Nondestructive Testing 10 (1974) 3, New York, Seiten 356 bis 358 beschriebene Vorrichtung zur Auffindung von Fehlern in Schweißnähten. Dadurch ist aber bereits der Ort, an dem die Fehler auftreten können, strikt eingegrenzt. Die Inspektion der Schweißnaht erfolgt mit mindestens 2 zueinander symmetrisch stehenden Ultraschallprüfköpfen. Dabei wird das ringförmige Werkstück an der Stelle, an der sich die Schweißnaht befindet, in ein Wasserbad getaucht.

DE-A-1 573 616 beschreibt ein Verfahren zur Prüfung von Rohrwänden, wobei der Ultraschallprüfkopf zentrisch angeordnet ist, so daß die Ultraschallimpulse senkrecht auf der zu prüfenden Rohrwand auftreffen.

Aus J. Krautkrämer et al. "Werkstoffprüfung mit Ultraschall", dritte Auflage, 1975, Springer-Verlag, Seiten 442 bis 461 ist folgenden Verfahren bekannt.

Ein ins Rohrinnere eingeführter Normalprüfkopf strahlt in axialer Richtung. Vor dem Kopf befindet sich ein Spiegel, der den Schallstrahl in die gewünschte Richtung umlenkt. Je nach Orientierung und Form des Spiegels kann man zur Längsfehlerkontrolle, zur Querfehleruntersuchung oder für eine Wanddickenmessung einstrahlen.

Auch bei dieser Arbeitsweise ist es möglich, das Vorhandensein von Fehlern in der Wand des Hohlkörpers festzustellen, allerdings gelingt es nicht, sie eindeutig zu lokalisieren.

Diese Beeinträchtigung des Prüfverfahrens beruht darauf, daß die von der äußeren Oberfläche des Hohlkörpers reflektierten Strahlen die Genauigkeit der Prüfanzeigen beeinflussen.

Die US-A-3 584 504 betrifft eine Vorrichtung und ein Verfahren, Rohre, deren Innendurchmesser sich verändert, von innen mittels Ultraschall zu untersuchen. Hierbei treffen die Ultraschallwellen in axialer Richtung, d.h. nicht senkrecht zur Rohrachse, auf die zu prüfende Oberfläche auf. Die reflektierten Wellen kehren nicht zum Ultraschallsender zurück, sondern werden von einem separaten Ultraschallempfänger, der ebenso wie der Ultraschallsender eine axiale Position einnimmt, aufgefangen. Diese Art der Untersuchung läßt nur Unregelmäßigkeiten an der Oberfläche der Innenseite des kohlkörpers erkennen. Hingegen werden Fehler im Inneren der Wandung - wie radiale Risse - nicht erfaßt, da sie parallel zu den ausgesendeten Ultraschallwellen liegen. Derartige Risse reflektieren deshalb keine Ultraschallwellen und können überhaupt nicht entdeckt werden.

Es bestand daher die Aufgabe, ein Verfahren und einer Vorrichtung zu entwickeln, das die geschilderten Schwierigkeiten vermeidet und in einfacher Weise das Auffinden und Lokalisieren von Fehlern auf der Oberfläche und im Innern des Materials zuläßt.

Die Erfindung besteht in einem Verfahren zur Feststellung von Materialfehlern in Hohlkörpern, bei dem ein in das Innere des Hohlkörpers eingeführter Ultraschall-Prüfkopf Ultraschallwellen sendet und empfängt, bei dem Ultraschallprüfkopf und Hohlkörper gegeneinander um die Hohlkörper-Mittelachse gedreht werden und bei dem die auf die Hohlkörperinnenwand auftreffenden Wellen in einer Ebene senkrecht zur Hohlkörper-Mittelachse liegen und nicht senkrecht auf die Hohlkörperinnenwand auftreffen, dadurch gekennzeichnet, daß der Ultraschallprüfkopf - ausgehend von einer zentrischen Lage - um eine derartige Strecke senkrecht zur Wellenrichtung, die einer zentrischen Lage des Ultraschallprüfkopfes entspricht, verschoben ist, daß die von ihm ausgesandten Wellen unter einem Brechungswinkel (β) von 60° bis 80° in die Rohlkörperwandung eindringen und daß der Ultraschallprüfkopf um die Hohlkörper-Mittelachse gedreht wird, wobei die Drehung in einer senkrecht zu dieser Achse stehenden Ebene erfolgt.

Das erfindungsgemäße Verfahren stellt sicher, daß die vom Prüfkopf ausgesandten Ultraschallwellen mit einer zur Hohlkörperachse senkrechten Ebene unter einem Auftreffwinkel α auf die innere Oberfläche des Hohlkörpers auftreffen und daß der Brechungswinkel β 60° bis 80° beträgt.

Das erfindungsgemäße Verfahren beruht wie alle Prüf- und Meßmethoden, die unter Anwendung von Ultraschall arbeiten, auf dem Empfang von Echos, die von Ungänzen, die im Materialinnern und auf der Oberfläche vorhanden sind, gebildet werden.

Die Besonderheit der neuen Arbeitsweise besteht darin, ddaß die Wellen vom Ultraschallsender nicht senkrecht auf die durch den Auftreffpunkt auf der Materialoberfläche gelegten Tangente fallen, sondern unter einen Winkel α auftreffen.

Dieser Winkel α wird gebildet aus der Ausbreitungsrichtung der Welle und der Lotrechten auf die Tangente im Auftreffpunkt der Welle auf die Oberfläche. Er ist so zu wählen, daß der Beugungswinkel β der Schallwelle im Material immer kleiner als 90° ist und insbesondere 60 bis 80° beträgt. Auf diese Weise wird sichergestellt, daß insbesondere die auf Risse auftreffenden Ultraschallwellen so reflektiert werden, daß sie optimal empfangen werden können.

Man erreicht die erforderliche Geometrie des Wellenganges durch eine exzentrische Anordnung des Ultraschall-Prüfkopfes, der - bezogen auf eine zentrische Anordnung - um eine Strecke parallel zur Wellenrichtung versetzt angeordnet ist. Die ausgesendeten Ultraschallwellen befinden sich in der zur gedachten Mittelachse des Hohlkörpers senkrechten Ebene. Durch eine konzentrische Drehung des Ultraschall-Prüfkopfes von 360° um die Mittelachse überstreichen die Ultraschallwellen die zur Mittelachse senkrechte Ebene und ermöglichen die Überprüfung eines entsprechenden Teilabschnittes des Hohlkörpers.

Die Vorrichtung zur Durchführung des erfindungsgemäßen Verfahrene besteht aus einem Ultraschall-Prüfkopf, der sich in einer mit einer Kopplungsflüssigkeit gefüllten Kammer befindet und mit einer Vorschubvorrichtung verbunden ist, sowie einem Eintritt für die Kopplungsflüssigkeit und einem Versorgungskabel und ist im Anspuch 2 dargelegt.

Als Ultraschall-Prüfkopf kann man z. B. einen Stoßwellen-Prüfkopf mit geringen Abmessungen verwenden, der im Megahertz-Bereich als Sender und Empfänger arbeitet und dessen Abmessungen sich nach der Größe des Hohlkörpers richten. Dieser Prüfkopf befindet sich in einer mit Kopplungsflßsigkeit gefüllten, dichten Kammer. Die Kopplungsflüssigkeit dient zur Verbesserung der Übertragung der Ultraschall-Signale in die Wand des Hohlkörpers. Als Kopplungsflüssigkeiten werden üblicherweise Wasser oder Mineralöl verwendet.

Um sicherzustellen, daß möglichst wenig Kopplungsflüssigkeit verlorengeht, ist für eine sorgfältige Abdichtung der Kammer Sorge zu tragen. Man erreicht das z. B. durch Verwendung von Topfmanschetten oder O-Ringen aus Gummi.

Dennoch auftretende Leckageverluste werden durch Zugabe von Kopplungsflüssigkeit über einen Versorgungsschlauch ausgeglichen.

Durch Verwendung einer Vorschubvorrichtung z. B. Kardangelenkgestänge mit elektrischem oder hydraulischem Antrieb wird erreicht, daß der Ultraschall-Prüfkopf nich nur durch gerade Rohrstücke geführt, sondern auch in gebogenen Rohren eingesetzt werden kann. Entsprechende Vorschubvorrichtungen sind bekannt und brauchen nicht näher beschrieben zu werden. Für die Untersuchung gebogener Rohre ist die Vorschubvorrichtung mit einer flexiblen Welle oder einem Kirdangelenkgestänge verbunden. Selbstverständlich sind derartige Gestänge bei der Untersuchung gerader Rohre nicht erforderlich; hier reicht die Verwendung einer geraden Stange.

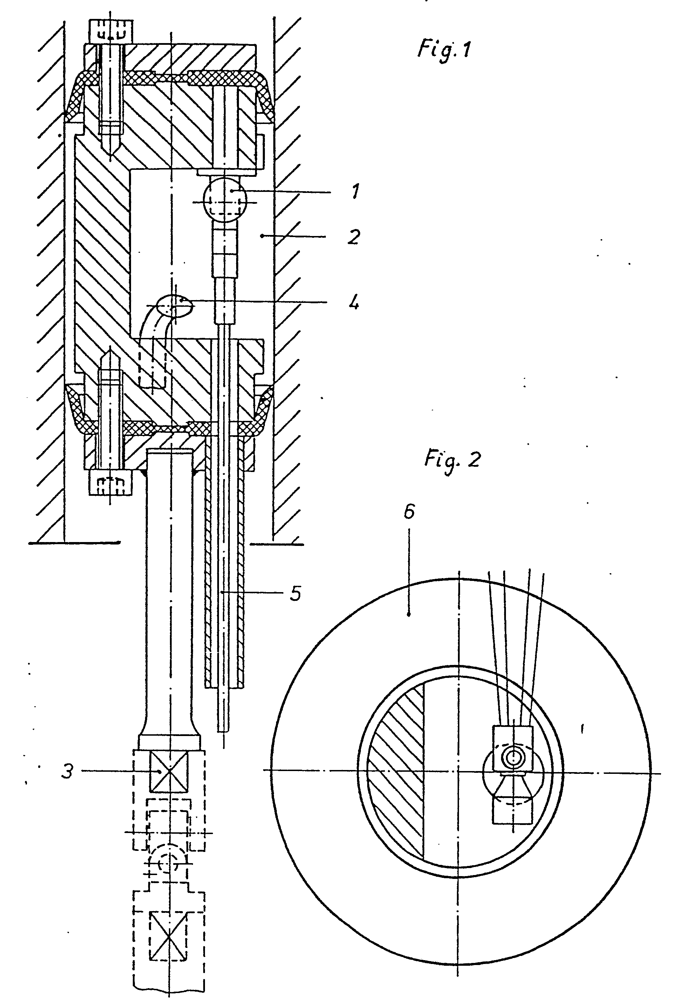

In Figur 1 und 2 ist eine Ausführungsform des neuen Prüfgerätes dargestellt. Hierin bedeuten
1 einen Ultraschall-Prüfkopf, der als Sender und Empfänger arbeitet
2 eine mit Kopplungsflüssigkcit gefüllte Kammer
3 eine Vorschubvorrrichtung (Kardangelenkgestänge mit elektrischem oder hydraulischem Antrieb)
4 einen Eintritt für die Kopplungsflüssigkeit
5 ein Versorgungskabel
6 ein zu untersuchendes Rohr

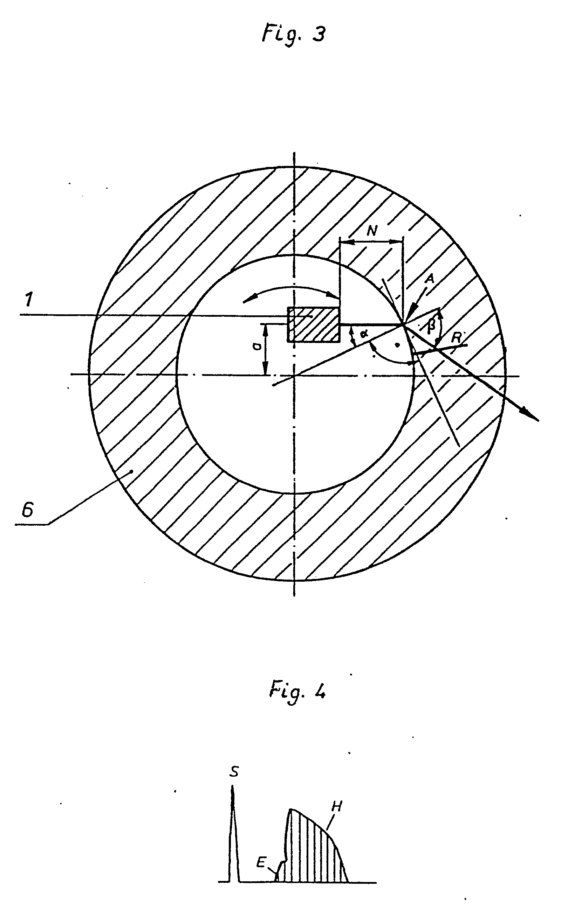

Das Funktionsprinzip des Ultraschall-Prüfkopfes basiert auf der Erfassung von Ultraschall-Echos, die von Materialfehlern innerhalb der Robrwand reflektiert werden. Die Anordnung des Ultraschall-Prüfkopfes und die dem Messvorgang zugrunde liegende Geometrie des Strahlenganges ist aus Figur 3 zu ersehen. Die Zeichenebene entspricht hierbei dem Querschnitt des zu untersuchenden Rohres und gleichzeitig der Strahlungsebene des Ultraschalls.

Der Ultraschall-Prüfkopf ist um die Strecke a von der Rohrachse versetzt exzentrisch angeordnet. Die Ultraschall-Impulse treffen dadurch nicht radial auf die Innenwand des Hohlkörpers auf. Der Auftreffwinkel der Ultraschall-Impulse α soll ungefähr 25° betragen, um zu gewährleisten, daß der Beugungs- bzw. Reflexionswinkel β im Rohrmaterial möglichst groß ist, d.h. kleiner als 90° ist und insbesondere 60° - 80° beträgt; je größer β ist, um so besser lassen sich die Ultraschall-Echos zur Bestimmung von Materialfehlern (Größe und Ort) auswerten. Es sei erwähnt, daß der Auftreffwinkel α keine feste Größe darstellt, sondern vielmehr den Eigenschaften des zu prüfenden Materials anzupassen ist.

Der Prüfkopf wird bei vorgegebener Position im Hohlkörper, z.B. einem Rohr, um 360° gedreht und vollzieht dabei eine um die Rohrachse konzentrische Bahn. Bei Auftreffen der Ultraschall-Impulse auf einen Materialfehler ergibt sich ein Signal (Aufzeichnung der Stärke der reflektierten Echos in Abhängigkeit von de Drehbewegung des Ultraschall-Prüfkopfes), das z. B. aui einen Bildschirm oder Schreiber registriert wird. Im Falle eines Lunkers ergibt sich als Signal ein Peak, während ein Riß R in Abhängigkeit seiner Tiefe eine Hüllkurve H ergibt (Vergl. auch Figur 4; S = Sendeimpuls; H = Hüllkurve, E = von Rohrinnenwand reflektiertes Signal). Der Abfall der Hüllkurve bedeutet, daß keine Echos von der Fehlstelle im Wandmaterial empfangen werden und dies läßt den Schluß zu, daß der Ultraschall-Prüfkopf in dieser Position die Fehlstelle nicht mehr mit seinen im Rohrwandmedium entsprechend gebeugten Schallwellen erfaßt. Die reflektierten Impulse, die von Ultraschall-Prüfkopf empfangen werden, nehmen den gleichen Weg, wie die ausgestrahlten Impulse. Auf diese Weise und aus der Intensität der reflektierten Echos lassen sich Ort und Umfang der Fehlstelle feststellen.

Die Nahfeldlänge N ist durch die Bauausführung des Ultraschall-Prüfkopfes vorgegeben, N entspricht der Fokussierung der abgestrahlten Ultraschall-Impulse. Je nach den Abmessungen des zu prüfenden Rohres kann es sich empfehlen, einen entsprechend ausgelegten Ultraschall-Prüfkopf einzusetzen, da die Nahfeldlänge N der Distanz von Ultraschall-Prüfkopf-Austritt bis zum Auftreffpunkt A entsprechen soll.

Der Ultraschall-Prüfkopf wird axial in das Rohr vorgeschoben und prüft dann erneut entsprechend seiner jetzigen Position durch Drehung von 360 Grad um die Rohrachse einen nächsten Rohrabschnitt. Dieser Vorgang wird so oft wiederholt, bis der zu prüfende Rohrabschnitt vollständig untersucht ist.

Dieses neue Prüfgerät eignet sich zur Untersuchung von Rohren aus den verschiedensten Materialien, z.B. aus Eisen, Chrom-Nickel-Stählen, Keramik und Kunststoffen wie Polyethylen.

**Patentansprüche**

1.) Verfahren zur Feststellung von Materialfehlern in Hohlkörpern, bei dem ein in das Innere des Rohlkörpers eingeführter Ultraschall-Prüfkopf Ultraschallwellen sendet und empfängt, bei dem Ultraschallprüfkopf und Hohlkörper gegeneinander um die Hohlkörper-Mittelachse gedreht werden und bei dem die auf die Hohlkörperinnenwand auftreffenden Wellen in einer Ebene senkrecht zur Hohlkörper-Mittelachse liegen und nicht senkrecht auf die Rohlkörperinnenwand auftreffen, dadurch gekennzeichnet, daß der Ultraschallprüfkopf - ausgehend von einer zentrischen Lage - um eine derartige Strecke senkrecht zu Wellenrichtung, die einer zentrischen Lage des Ultraschallprüfkopfes entspricht, verschoben ist, daß die von ihm ausgewandten Wellen unter einem Brechungswinkel ($\beta$) $\alpha$ 60° bis 80° in die Hohlkörperwandung eindringen und daß der Ultraschallprüfkopf um die Hohlkörper-Mittelachse gedreht wird, wobei die Drehung in einer senkrecht zu dieser Achse stehenden Ebene erfolgt.

2.) Vorrichtung zur Feststellung von Materialfehlern in Hohlkörpern nach Anspruch 1 mit einem in das Hohlkörperinnere einführbaren Ultraschallprüfkopf (1), der Ultraschallwellen sendet und empfängt, wobei die auf die Hohlkörper-Innenwand auftreffenden Wellen in einer Ebene senkrecht zur Hohlkörper-Mittelachse liegen und nicht senkrecht auf die Hohlkörper-Innenwand auftreffen, mit einer Vorschubeinrichtung für den Ultraschallprüfkopf (1) und mit einer Einrichtung, durch die Ultraschallprüfkopf und Hohlkörper relativ zueinander um die Hohlkörper-Mittelachse gedreht werden können, dadurch gekennzeichnet daß der Ultraschallprüfkopf (1) - ausgehend von einer zentrischen Lage - um eine derartige Strecke senkrecht zur Wellenrichtung, die einer zentrischen Lage entspricht, verschoben ist, daß die von ihm ausgesandten Wellen unter einem Brechungswinkel ($\beta$) von 60° bis 80° in die Hohlkörperwandung eindringen und daß der Ultraschallprüfkopf (1) sich in einer mit Kopplungsflüssigkeit gefüllten Kammer (2) befindet und mit einer drehbaren Vorschubvorrichtung (3), mit der der Ultraschallprüfkopf (1) um die Hohlkörper-Mittelachse und in einer Ebene senkrecht zu dieser Achse gedreht werden kann, sowie mit einem Eintritt (4) für Kopplungsflüssigkeit und einem Versorgungskabel (5) verbunden ist.

**Claims**

1) A process for detecting material flaws in hollow bodies during which an ultrasonic probe head introduced into the interior of the hollow body transmits and receives, the ultrasonic probe head is rotated within the hollow body about the centre axis of said hollow body and the waves strike the inner surface of the hollow body in a plane perpendicular to the centre axis of the hollow body and do not strike perpendicular to the inner surface of the hollow body, characterised in that the ultrasonic probe head is shifted from a centric position by a path perpendicular to the direction of the waves corresponding to the centric position of the ultrasonic probe head until the waves transmitted by said probe head penetrate the wall of the hollow body at an angle of refraction ($\beta$) of 60° to 80° and the ultrasonic probe head is turned about the centre axis of the hollow body, the rotation being executed in a plane perpendicular to said axis.

2) An apparatus for detecting material flaws in hollow bodies as set forth in claim 1 with an ultrasonic probe head (1) which can be introduced into the interior of the hollow body and transmits and receives ultrasonic waves, the waves strike the inner surface of the hollow body perpendicular to the centre axis of the hollow body and do not strike perpendicular to the inner surface of the hollow body, with a feed drive arrangement for the ultrasonic probe head (1) and a feature permitting the ultrasonic probe head and the hollow body to be turned relatively to each other about the centre axis of the hollow body, characterised in that the ultrasonic probe head (1) is shifted from a centric position by a path perpendicular to the direction of the waves corresponding to the centric position of the ultrasonic probe head until the waves transmitted by said probe head penetrate the wall of the hollow body at an angle of refraction (β) of 60° to 80° and the ultrasonic probe head (1) is located in a chamber (2) filled with coupling fluid and is connected to a rotatable feed drive arrangment (3) with which the ultrasonic probe head (1) can be turned about the centre axis of the hollow body and in a plane perpendicular to said axis, as well as to an inlet (4) for the coupling fluid and a supply cable (5)

**Revendications**

1. Procédé pour la détection de défauts du matériau dans des corps creux, dans lequel un palpeur à ultrasons introduit à l'intérieur du corps creux émet et reçoit des ondes ultrasonores, le palpeur et le corps creux tourment l'un par rapport à l'autre autour de l'axe médian du corps creux, et les ondes atteignant la parmi intérieure du corps creux se situent dans un plan perpendiculaire à l'axe médian de ce dernier et ne tombent pas perpendiculairement sur la paroi intérieure du corps creux, ledit procédé étant caractérisé en ce que le palpeur à ultrasons est décalé, à partir d'une position centrée, perpendiculairement à la direction des ondes et d'une distance correspondant à une position centrée du palpeur; les ondes émises par le palpeur pénétrent dans la paroi du corps creux sous un angle de réfraction (β) de 60 à 80° ; et le palpeur à ultrasons tourne autour de l'axe médian du corps creux, la rotation s'effectuant dans un plan perpendiculaire audit axe.

2. Dispositif pour la détection de défauts du matériau de corps creux selon revendication, avec un palpeur à ultrasons (1) pouvant être introduit à l'intérieur du corps creux et émettant et recevant des ondes ultrasonores, les ondes atteignant la paroi interieure du corps creux se situant dans un plan perpendiculaire à l'axe médian de ce dernier et ne tombant pas perpendiculairement sur la paroi intérieure du corps creux; avec un dispositif d'avance du palpeur à ultrasons (1); et avec un dispositif permettant une rotation relative du palpeur à ultrasons et du corps creux autour de l'axe médian de ce dernier, ledit dispositif étant caractérisé en ce que le palpeur à ultrasons (1) est décalé, à partir d'une position centrée, perpendiculairement à la direction des ondes et sur une distance correspondant à une position centrée; les ondes émises par le palpeur pénètrent dans la paroi du corps creux sous un angle de réfraction (β) de 60 à 80° ; et le palpeur à ultrasons (1) se trouve dans une chambre (2) remplie par un liquide de couplage et est relié à une dispositif d'avance rotatif (3), permettant de faire tourner le palpeur à ultrasons (1) autour de l'axe médian du corps creux et dans un plan perpendiculaire audit axe, ainsi qu'à un orifice d'entrée (4) du liquide de couplage et à un câble d'alimentation (5).

Fig.1

Fig. 2

Fig. 3

Fig. 4